(19) Europäisches Patentamt

European Patent Office

Office européen des brevets

(11) EP 0 515 969 B1

(12) **EUROPÄISCHE PATENTSCHRIFT**

(45) Veröffentlichungstag und Bekanntmachung des Hinweises auf die Patenterteilung:
04.09.1996 Patentblatt 1996/36

(51) Int. Cl.$^6$: **B32B 27/32**, B32B 27/20, C08L 23/02, B65D 65/40

(21) Anmeldenummer: 92108507.2

(22) Anmeldetag: 20.05.1992

(54) **Siegelbare, opake, biaxial orientierte Polypropylen-Mehrschichtfolie, Verfahren zu ihrer Herstellung und ihre Verwendung**

Biaxially oriented opaque multilayer sealable polypropylene film, process of preparation and use thereof

Pellicule multicouche de polypropylène biaxialement orientée, opaque et scellable, procédé pour sa fabrication et son utilisation

(84) Benannte Vertragsstaaten:
BE DE FR GB IT NL

(30) Priorität: 28.05.1991 DE 4117442
03.02.1992 DE 4202982

(43) Veröffentlichungstag der Anmeldung:
02.12.1992 Patentblatt 1992/49

(73) Patentinhaber: HOECHST AKTIENGESELLSCHAFT
65926 Frankfurt am Main (DE)

(72) Erfinder:
• Schuhmann, Detlef Erich, Dr.
W-6229 Kiedrich (DE)
• Peiffer, Herbert, Dr.
W-6500 Mainz-Finthen (DE)
• Schlögl, Gunter, Dr.
W-6233 Kelkheim (DE)

(56) Entgegenhaltungen:
EP-A- 0 044 544          EP-A- 0 180 087
EP-A- 0 184 094          EP-A- 0 263 698
EP-A- 0 321 843          EP-A- 0 408 971
EP-A- 0 477 797

• WORLD PATENTS INDEX LATEST AN 84-020522 Week 04 Derwent Publications Ltd., London GB

**Beschreibung**

Die Erfindung betrifft eine siegelbare, opake, biaxial orientierte Polypropylen-Mehrschichtfolie aus mindestens einer Kernschicht K und einer darauf angeordneten Zwischenschicht Z und einer auf der Zwischenschicht angeordneten Deckschicht D gemäß einem Aufbau KZD.

Die Kernschicht enthält im wesentlichen ein Polypropylenpolymer oder eine Polypropylenmischung und Calciumcarbonatpartikel einer bestimmten kritischen Größe und gegebenenfalls Titandioxid. Die Zwischenschicht/en enthält/enthalten im wesentlichen ein Polypropylenpolymer oder eine Polypropylenmischung und gegebenenfalls zugesetztes Titandioxid und/oder Kohlenwasserstoffharz. Beidseitig angeordnete Zwischenschichten können nach ihrem Aufbau, ihrer Zusammensetzung und ihrer Dicke gleich oder verschieden sein. Die Deckschicht/en enthält/enthalten im wesentlichen Co- und/oder Terpolymere aus $\alpha$-Olefinen mit 2 bis 10 Kohlenstoffatomen, gegebenenfalls gemischt mit Polypropylen. Beidseitig angeordnete Deckschichten können nach ihrem Aufbau, ihrer Zusammensetzung und ihrer Dicke gleich oder verschieden sein. Mindestens eine Deckschicht der Mehrschichtfolie ist siegelbar und nicht dicker als 0,4 $\mu$m. Das Polymere der Deck- und/oder Zwischenschicht/en kann gegebenenfalls peroxidisch abgebaut sein.

Die Erfindung betrifft ferner ein Verfahren zur Herstellung der Mehrschichtfolie sowie ihre Verwendung.

Opake Folien sind allgemein bekannt. So wird beispielsweise in der EP-A-0 180 087 eine fünfschichtige siegelfähige Folie beschrieben, die eine vakuolenhaltige Basisschicht, hergestellt aus Propylenhomopolymer und Calciumcarbonat, aufweist, eine Zwischenschicht aus Propylenhomopolymer und Kohlenwasserstoffharz hat und deren siegelfähige Deckschichten aus Propylen/Ethylen-Copolymeren bestehen.

Bedingt durch die dicke Zwischenschicht aus Polypropylen und Kohlenwasserstoffharz weist die Folie bessere mechanische Eigenschaften sowie einen höheren Glanz auf als Folien nach dem Stand der Technik. Daneben ist die Folie infolge der aufgeprägten Siegelschichten aus Propylen/Ethylen-Copolymeren gut coronabehandelbar. Verbesserungwürdig ist die Folie im Glanz und im Weißgrad bzw. in der Opazität. Die noch nicht optimalen Glanzwerte resultieren aus der üblichen Deckschichtdicke von 0,5 bis 2 $\mu$m, und die niedrigen Opazitätswerte sind auf die dicken transparenten Zwischenschichten zurückzuführen. Für die vakuolenhaltige Kernschicht bleibt nur ein geringer Dickenanteil übrig.

Aus der EP-A-0 312 226 ist eine mehrschichtige opake Folie bekannt, bei der eine Deckschicht aus einem gut bedruckbaren (printable) Polymer besteht, die eine Zwischenschicht aus Propylenhomopolymeren aufweist und eine Kernschicht hat, die vakuolenhaltig ist. Die Folie soll sich - gesehen von der Homopolymerseite aus - durch einen guten Glanz auszeichnen. Bedingt durch die angegebenen Schichtdickenverhältnisse ist - ähnlich wie in EP-A-0 018 087 - der Oberflächenglanz und die Opazität bzw. der Weißgrad verbesserungswürdig.

In der EP-A-0 408 971 wird eine Folie mit hohem Weißgrad und hoher Opazität beschrieben, die gut bedruckbar ist und glänzend sein soll. Auch hier ist aufgrund der hohen Deckschichtdicke der Glanz verbesserungswürdig. Andererseits kann die Folie eine wolkige Struktur aufweisen, die wahrscheinlich von der kleinen Korngröße des verwendeten Calciumcarbonats herrührt. Die bevorzugt angegebene Teilchengröße von 1,0 $\mu$m hat eine schlechte Dispergierbarkeit im Polymeren zur Folge. Außerdem führt der erhöhte Feinanteil der Körner zu einer verringerten Opazität, da hierdurch keine Vakuolen entstehen.

In der EP-A-0 234 758 und in der EP-A-0 225 685 werden gut bedruckbare opake Folien beschrieben. Aufgrund der Oberflächenbeschaffenheit sind die Folien jedoch durch ein sehr mattes Aussehen geprägt.

Die Aufgabe der vorliegenden Erfindung bestand darin, die Nachteile der im Stand der Technik vorbeschriebenen Folien zu vermeiden. Insbesondere soll eine Mehrschichtfolie zur Verfügung gestellt werden, die durch einen hohen Weißgrad und eine hervorragende Opazität ausgezeichnet ist. Gleichzeitig soll die Folie einen guten Glanz und mindestens eine Deckschicht mit guten Siegeleigenschaften, insbesondere mit einem großen Siegelbereich und einer guten Siegelnahtfestigkeit, aufweisen.

Je nach ihrem Verwendungszweck soll die Folie gegebenenfalls zusätzlich eine bedruckbare Oberfläche und eine hohe, über lange Lagerzeiten hinweg beständige Oberflächenspannung besitzen, die auch nach mehr als drei Monaten nicht unter 36 mN/m fällt. Ein besonderes Anliegen der Erfindung ist es daneben, den Weißgrad und die Opazität der Folie bei gegebener Dicke und gegebenem Oberflächenglanz zu maximieren. Eine solche Folie stellt vom Materialeinsatz her die günstigste Lösung dar.

Erfindungsgemäß wird diese Aufgabe gelöst durch eine Mehrschichtfolie der eingangs genannten Gattung, wobei

a) die Kernschicht ein Propylenpolymeres und Calciumcarbonat oder eine Polypropylenmischung und Calciumcarbonat mit einem mittleren Teilchendurchmesser von 1 bis 2 $\mu$m enthält,

b) die Zwischenschicht ein Propylenpolymeres oder eine Polypropylenmischung enthält und

c) die Deckschicht eine Dicke von $\leq$0,4 $\mu$m aufweist und kein Polydimethylsiloxan und kein $SiO_2$ enthält und das Polymere der Deckschicht peroxidisch abgebaut ist und das Polymere

ein Copolymeres von

Ethylen und Propylen oder

2

Ethylen und Butylen oder
Propylen und Butylen oder
Ethylen und einem anderen $\alpha$-Olefin mit 5 bis 10 Kohlenstoffatomen oder
Propylen und einem anderen $\alpha$-Olefin mit 5 bis 10 Kohlenstoffatomen oder
ein Terpolymeres von
Ethylen und Propylen und Butylen oder
Ethylen und Propylen und einem anderen $\alpha$-Olefin mit 5 bis 10 Kohlenstoffatomen oder
eine Mischung aus einem oder mehreren der genannten Co- und/oder Terpolymeren mit Polypropylen oder
eine Mischung aus zwei oder mehreren der genannten Co- und/oder Terpolymeren

ist.

Die erfindungsgemäße Folie ist mindestens dreischichtig und umfaßt als wesentliche Schichten zumindest die Kernschicht K und eine Zwischenschicht Z und eine Deckschicht D gemäß einem Aufbau KZD. Die Wahl der Anzahl der Schichten hängt in erster Linie von dem vorgesehenen Einsatzzweck ab, wobei vier- und fünfschichtige Ausführungsformen besonders bevorzugt sind entsprechend einem symmetrischen Aufbau DZKZD oder einem asymmetrischen Aufbau DKZD.

Die Gesamtdicke der Folie kann innerhalb weiter Grenzen variieren und richtet sich nach dem beabsichtigten Verwendungszweck.

Die bevorzugten Ausführungsformen der erfindungsgemäßen Folie haben Gesamtdicken von 10 bis 120 $\mu$m, wobei 20 bis 80 $\mu$m, insbesondere 30 bis 60 $\mu$m, bevorzugt sind.

Die Dicke der Zwischenschicht/en beträgt jeweils unabhängig voneinander 2 bis 12 $\mu$m, wobei Zwischenschichtdicken von 3 bis 8 $\mu$m, insbesondere 3 bis 6 $\mu$m, bevorzugt sind. Die angegebenen Werte beziehen sich jeweils auf eine Zwischenschicht.

Erfindungswesentlich für das Eigenschaftsprofil ist mindestens eine Deckschicht von 0,4 $\mu$m oder weniger, wobei das Polymere der Deckschicht peroxidisch abgebaut ist und der Abbaufaktor vorzugsweise 3 bis 15 beträgt. Für diese 'dünne' Deckschicht ist der Bereich von 0,1 bis 0,3 $\mu$m bevorzugt. Die Dicke der zweiten Deckschicht - wenn vorhanden - wird unabhängig von der anderen 'dünnen' Deckschicht gewählt und kann grundsätzlich ebenfalls 'dünn' im Sinne von $\leq$0,4 $\mu$m, bevorzugt 0,1 bis 0,3 $\mu$m, oder auch dicker sein.

Für eine zweite 'dickere' Schicht sind Dicken von >0,6 $\mu$m bevorzugt, insbesondere 0,7 bis 2 $\mu$m.

Die Angabe der bevorzugten Dicken für die zweite Deckschicht charakterisieren besonders vorteilhafte Ausführungsformen. Damit soll jedoch die im Wertebereich entstehende Lücke zwischen 0,4 und 0,6 $\mu$m nicht von der Erfindung ausgeschlossen werden.

Die Dicke der Kernschicht ergibt sich entsprechend aus der Differenz von Gesamtdicke und der Dicke der aufgebrachten Deck- und Zwischenschicht/en und kann daher analog der Gesamtdicke innerhalb weiter Grenzen variieren.

Mischungen im Sinne der vorliegenden Erfindung umfassen sowohl mechanische Mischungen aus den einzelnen Komponenten als auch legierungsartige Mischungen, welche im allgemeinen als Blends bezeichnet werden.

Die Kernschicht der erfindungsgemäßen Mehrschichtfolie enthält im wesentlichen ein Propylenpolymer oder eine Polypropylenmischung und die genannten Calciumcarbonatpartikeln mit einem mittleren Teilchendurchmesser zwischen 1 und 2 $\mu$m und gegebenenfalls weitere zugesetzte Additive in jeweils wirksamen Mengen.

Das Polypropylenpolymere enthält zum überwiegenden Teil (mindestens 90 %) Propylen und besitzt einen Schmelzpunkt von 140 °C oder höher, vorzugsweise 150 bis 170 °C. Isotaktisches Homopolypropylen mit einem n-heptanlöslichen Anteil von 6 Gew.-% und weniger, bezogen auf das isotaktische Homopolypropylen, Copolymere von Ethylen und Propylen mit einem Ethylengehalt von 10 Gew.-% oder weniger, Copolymere von Propylen mit $C_4$-$C_8$-$\alpha$-Olefinen mit einem $\alpha$-Olefingehalt von 10 Gew.-% oder weniger stellen bevorzugte Propylenpolymere für die Kernschicht dar, wobei isotaktisches Homopolypropylen besonders bevorzugt ist. Die angegebenen Gewichtsprozente beziehen sich auf das jeweilige Copolymer. Das Propylenpolymere der Kernschicht hat im allgemeinen einen Schmelzflußindex von 0,5 g/10 min bis 8 g/10 min, vorzugsweise 2 g/10 min bis 5 g/10 min, bei 230 °C und einer Kraft von 21,6 N (DIN 53 735). Des weiteren ist eine Mischung aus den genannten Propylenhomo- und/oder -copolymeren und/oder anderen Polyolefinen, insbesondere mit 2 bis 6 C-Atomen, geeignet, wobei die Mischung mindestens 50 Gew.-%, insbesondere mindestens 75 Gew.-%, Propylenpolymerisat enthält. Geeignete andere Polyolefine in der Polymermischung sind Polyethylene, insbesondere HDPE, LDPE und LLDPE, wobei der Anteil dieser Polyolefine jeweils 15 Gew.-%, bezogen auf die Polymermischung, nicht übersteigt.

Neben dem genannten Calciumcarbonat ist als weiteres Kernschichtadditiv, welches gegebenenfalls zugesetzt sein kann, Titandioxid besonders geeignet. Vorzugsweise bestehen die Titandioxidteilchen überwiegend aus Rutil, welcher im Vergleich zum Anatas eine höhere Deckkraft zeigt. In bevorzugter Ausführungsform bestehen die Titandioxidteilchen zu mindestens 95 Gew.-% aus Rutil.

Sie können nach einem üblichen Verfahren, z. B. nach dem Chlorid- oder Sulfatprozeß, hergestellt werden. Titandioxid selbst ist bekanntlich photoaktiv. Bei Einwirkung von UV-Strahlen bilden sich freie Radikale auf der Oberfläche der $TiO_2$-Partikel. Diese freien Radikale können zu Abbaureaktionen und Vergilbungen führen. Daher werden die Titandioxidteilchen bevorzugt mit einem Überzug aus anorganischen Oxiden eingesetzt, wie er üblicherweise als Überzug für $TiO_2$-Weißpigment in Papieren oder Anstrichmitteln zur Verbesserung der Lichtechtheit verwendet wird. Zu den besonders geeigneten anorganischen Oxiden gehören die Oxide von Aluminium, Silicium, Zink oder Magnesium oder Mischungen aus zwei oder mehreren dieser Verbindungen. Die anorganischen Oxide werden aus wasserlöslichen Verbindungen, z. B. Alkali-, insbesondere Natriumaluminat, Aluminiumhydroxid, Aluminiumsulfat, Aluminiumnitrat, Natriumsilikat oder Kieselsäure, in der wäßrigen Suspension ausgefällt. $TiO_2$-Partikel mit einem Überzug aus mehreren dieser Verbindungen werden z. B. in der EP-A-0 078 633 und EP-A-0 044 515 beschrieben.

Weiterhin enthält der Überzug organische Verbindungen mit polaren und unpolaren Gruppen. Die organischen Verbindungen müssen bei der Herstellung der Folie durch Extrusion der Polymerschmelze ausreichend stabil sein. Polare Gruppen sind beispielsweise -OH, -OR, -COOX (X = R, H oder Na; R = $C_1$-$C_{34}$-Alkyl). Bevorzugte organische Verbindungen sind Alkanole und Fettsäuren mit 8 bis 30 C-Atomen in der Alkylgruppe, insbesondere Fettsäuren und primäre n-Alkanole mit 12 bis 24 C-Atomen, sowie Polydiorganosiloxane und/oder Polyorganohydrogensiloxane wie Polydimethylsiloxan und Polymethylhydrogensiloxan.

Der Überzug auf den $TiO_2$-Teilchen besteht gewöhnlich aus 1 bis 12 g, insbesondere 2 bis 6 g, anorganischer Oxide und 0,5 bis 3 g, insbesondere 0,7 bis 1,5 g, organischer Verbindung, bezogen auf 100 g $TiO_2$-Teilchen. Der Überzug wird auf die Teilchen in wäßriger Suspension aufgebracht. Als besonders vorteilhaft hat es sich erwiesen, wenn die $TiO_2$-Teilchen mit $Al_2O_3$ und Stearinsäure beschichtet sind.

Der Anteil an Titandioxid in der Kernschicht - sofern vorhanden - beträgt 1 bis 9 Gew.-%, bevorzugt 1 bis 5 Gew.-%, bezogen auf die Kernschicht. Die mittlere Teilchengröße ist sehr klein und liegt vorzugsweise bei 0,15 bis 0,30 µm, wobei sich die angegebene Teilchengröße auf die beschichteten Teilchen bezieht.

Mit diesem Gewichtsanteil und mit dieser Korngröße für das Titandioxid können dieoptischen Eigenschaften der Folie (Glanz, Opazität und höherer Weißgrad als mit 5 Gew.-% $TiO_2$ erreichbar ist) nicht mehr weiter optimiert werden.

Erfindungsgemäß erfolgen weitere Verbesserungen der optischen Eigenschaften über die Größe und Menge der Calciumcarbonatteilchen in der Kernschicht. Es wird dabei ausgegangen von einer üblichen Zusatzmenge von Calciumcarbonat von 2 bis 7 Gew.-% in der Kernschicht, vorzugsweise 3 bis 5 Gew.-%, bezogen auf das Gewicht der Kernschicht. Gemäß dem Stand der Technik liegt der mittlere Teilchendurchmesser des verwendeten $CaCO_3$ im Bereich von 0,7 bis 5 µm, wobei 3 bis 4 µm einen bevorzugten Bereich darstellen.

Die Auswahl einer geeigneten Größe für den mittleren Teilchendurchmesser wird bei der hier vorliegenden Erfindung von mehreren, teilweise gegenläufigen Faktoren bestimmt.

Mit zunehmendem Teilchendurchmesser des $CaCO_3$ werden zwar die Vakuolen größer und damit die gewünschte Opazität der Kernschicht verbessert, aber der Glanz der Folie erniedrigt sich und gleichzeitig nimmt die Rauhigkeit der Oberflächen der Kernschicht zu. Damit ist bei zunehmender Korngröße des $CaCO_3$ gleichzeitig eine zunehmend dickere Zwischenschicht erforderlich. Bei vorgegebener Gesamtdicke der Folie beschränkt eine dickere Zwischenschicht jedoch gleichzeitig die Dicke der Kernschicht, welche die Opazität bedingt. Somit ist der Maximierung der Korngröße für eine möglichst gute Vakuolenbildung nach oben eine Grenze gesetzt.

Nach unten hin wird die Grenze der $CaCO_3$-Korngröße von der Dispergierfähigkeit des Calciumcarbonatkornes und von der Fähigkeit, Vakuolen zu bilden, vorgegeben. Außerdem wachsen die Kosten für das Calciumcarbonatmasterbatch bei Unterschreitung eines gewissen Teilchendurchmessers überproportional an.

Bei einer ausgewogenen Berücksichtigung all dieser Punkte wurde ein optimaler mittlerer Teilchendurchmesser von 1 bis 2 µm gefunden.

Ein mittlerer Teilchendurchmesser des $CaCO_3$ innerhalb dieses angegebenen Bereichs ist für das erfindungsgemäße Anforderungsprofil der Mehrschichtfolie mit einer Zwischenschicht wesentlich. Die besten Ergebnisse werden mit einer Calciumcarbonatkorngröße von ca. 1,5 µm für den mittleren Teilchendurchmesser erzielt.

Neben diesen besonders vorteilhaften Additiven $TiO_2$ und $CaCO_3$ kann die Kernschicht selbstverständlich gegebenenfalls noch weitere übliche Additive in jeweils wirksamen Mengen enthalten.

Durch den Zusatz von vakuolenbildendem $CaCO_3$ wird die Rauhigkeit der Oberflächen der Kernschicht vergrößert und der Glanz der Folie erniedrigt. Um diese nachteiligen Effekte auszugleichen, versieht man die Kernschicht auf mindestens einer Seite, gegebenenfalls auf beiden Seiten mit einer Zwischenschicht, wobei beidseitige Zwischenschichten nach ihrem Aufbau (Polymer), ihrer Zusammensetzung (Additive) und ihrer Dicke gleich oder verschieden sein können.

Diese Zwischenschicht/en enthält/enthalten im wesentlichen Polypropylenpolymere oder Polypropylenmischungen, wie sie vorstehend für die Kernschicht beschrieben wurden. Grundsätzlich können die Kernschicht und die Zwischenschicht/en aus gleichen oder verschiedenen Propylenpolymeren bzw. Mischungen aufgebaut sein.

Die Schmelzflußindices der Polymeren für die Kern- und Zwischenschicht/en sollen möglichst gleich groß sein. Gegebenenfalls kann der MFI der Zwischenschicht/en etwas höher liegen, wobei eine Differenz von 20 % nicht überschritten werden soll.

In einer besonders vorteilhaften Ausführungsform werden die in der Zwischenschicht eingesetzten Polypropylenpolymeren durch den Zusatz von organischen Peroxiden teilabgebaut. Ein Maß für den Grad des Abbaus des Polymeren ist der sogenannte Abbaufaktor A, welcher die relative Änderung des Schmelzflußindex nach DIN 53 735 des Polypropylens, bezogen auf das Ausgangspolymere, angibt.

$$A = \frac{MFI_2}{MFI_1}$$

MFI$_1$ =  Schmelzflußindex vor dem Zusatz des organischen Peroxids Polypropylenpolymerer

MFI$_2$ =  Schmelzflußindex des peroxidisch abgebauten Polypropylenpolymeren

Erfindungsgemäß liegt der Abbaufaktor A des eingesetzten Polypropylenpolymeren in einem Bereich von 3 bis 15, vorzugsweise 6 bis 10. Die Einhaltung dieses Bereichs ist für die gewünschten Glanzeigenschaften der Folie besonders günstig.

Als organische Peroxide sind Dialkylperoxide besonders bevorzugt, wobei unter einem Alkylrest die üblichen gesättigten geradkettigen oder verzweigten niederen Alkylreste mit bis zu sechs Kohlenstoffatomen verstanden werden. Insbesondere sind 2,5-Dimethyl-2,5-di(t-butylperoxy)-hexan oder Di-t-butylperoxid bevorzugt.

Als Additive sind der Kernschicht bevorzugt Titandioxid und/oder ein niedermolekulares Harz zugesetzt. Eine besonders geeignete Ausführungsform enthält ein TiO$_2$ in der Zwischenschicht, welches bezüglich Modifikation, Überzug, Teilchengröße etc. dem vorstehend für die Kernschicht beschriebenen entspricht. Der Anteil an TiO$_2$ in der Zwischenschicht liegt unter 5 Gew.-% und bevorzugt zwischen 1 und 5 Gew.-%, bezogen auf das Gewicht der Zwischenschicht. Insgesamt soll der Anteil an TiO$_2$ in Kern- und Zwischenschicht/en nicht über 5 Gew.-% liegen, bezogen auf das Gesamtgewicht von Kern- und Zwischenschicht.

Weiterhin ist der Zusatz eines niedermolekularen Harzes bevorzugt, dessen Anteil 1 bis 30 Gew.-%, vorzugsweise 2 bis 10 Gew.-%, beträgt. Der Erweichungspunkt des Harzes liegt zwischen 130 und 180 °C (gemessen nach DIN 1995-U4, entspricht ASTM E-28), vorzugsweise über 140 °C. Unter den zahlreichen niedrigmolekularen Harzen sind die Kohlenwasserstoffharze bevorzugt, und zwar in Form der Erdölharze (Petroleumharze), Styrolharze, Cyclopentadienharze und Terpenharze (diese Harze sind in Ullmanns Encyklopädie der techn. Chemie, 4. Auflage, Band 12, Seiten 525 bis 555, beschrieben).

Die Erdölharze sind solche Kohlenwasserstoffharze, die durch Polymerisation von tiefzersetzten (deep-decomposed) Erdölmaterialien in Gegenwart eines Katalysators hergestellt werden. Diese Erdölmaterialien enthalten gewöhnlich ein Gemisch von harzbildenden Substanzen wie Styrol, Methylstyrol, Vinyltoluol, Inden, Methylinden, Butadien, Isopren, Piperylen und Pentylen. Die Styrolharze sind niedrigmolekulare Homopolymere von Styrol oder Copolymere von Styrol mit anderen Monomeren wie Methylstyrol, Vinyltoluol und Butadien. Die Cyclopentadienharze sind Cyclopentadienhomopolymere oder Cyclopentadiencopolymere, die aus Kohlenteerdestillaten und zerlegtem Erdölgas erhalten werden. Diese Harze werden hergestellt, indem die Materialien, die Cyclopentadien enthalten, während einer langen Zeit bei hoher Temperatur gehalten werden. In Abhängigkeit von der Reaktionstemperatur können Dimere, Trimere oder Oligomere erhalten werden.

Die Terpenharze sind Polymerisate von Terpenen, d. h. Kohlenwasserstoffen der Formel C$_{10}$H$_{16}$, die in fast allen etherischen Ölen oder ölhaltigen Harzen von Pflanzen enthalten sind, und phenolmodifizierte Terpenharze. Als spezielle Beispiele der Terpene sind Pinen, $\alpha$-Pinen, Dipenten, Limonen, Myrcen, Camphen und ähnliche Terpene zu nennen. Bei den Kohlenwasserstoffharzen kann es sich auch um die sogenannten modifizierten Kohlenwasserstoffharze handeln. Die Modifizierung erfolgt im allgemeinen durch Reaktion der Rohstoffe vor der Polymerisation, durch Einführung spezieller Monomere oder durch Reaktion des polymerisierten Produkts, wobei insbesondere Hydrierungen oder Teilhydrierungen vorgenommen werden.

Als Kohlenwasserstoffharze werden außerdem Styrolhomopolymerisate, Styrolcopolymerisate, Cyclopentadienhomopolymerisate, Cyclopentadiencopolymerisate und/oder Terpenpolymerisate mit einem Erweichungspunkt von jeweils oberhalb 135 °C eingesetzt (bei den ungesättigten Polymerisaten ist das hydrierte Produkt bevorzugt). Ganz besonders bevorzugt werden die Cyclopentadienpolymerisate mit einem Erweichungspunkt von 140 °C und darüber in den Zwischenschichten eingesetzt.

Neben diesen bevorzugten Additiven kann die Zwischenschicht auch noch weitere übliche Additive enthalten.

Die auf der oder den äußeren Oberfläche/n der Zwischenschicht/en oder der Kernschicht angeordnete/n Deckschicht/en enthält/enthalten im wesentlichen

ein Copolymeres von

Ethylen und Propylen oder

Ethylen und Butylen oder

Propylen und Butylen oder

Ethylen und einem anderen $\alpha$-Olefin mit 5 bis 10 Kohlenstoffatomen oder

Propylen und einem anderen $\alpha$-Olefin mit 5 bis 10 Kohlenstoffatomen oder

ein Terpolymeres von

Ethylen und Propylen und Butylen oder

Ethylen und Propylen und einem anderen $\alpha$-Olefin mit 5 bis 10 Kohlenstoffatomen oder

eine Mischung aus einem oder mehreren der genannten Co- und/oder Terpolymeren mit Polypropylen oder

eine Mischung aus zwei oder mehreren der genannten Co- und/oder Terpolymeren und gegebenenfalls zugesetzte Additive.

Besonders bevorzugt enthält/enthalten die Deckschicht/en neben den optionalen Additiven

ein Copolymeres von

Ethylen und Propylen oder

Ethylen und Butylen-1 oder

Propylen und Butylen-1 oder

ein Terpolymeres von

Ethylen und Propylen und Butylen-1 oder

eine Mischung aus einem oder mehreren der genannten besonders bevorzugten Co- und/oder Terpolymeren mit Polypropylen oder

eine Mischung aus zwei oder mehreren der genannten besonders bevorzugten Co- und/oder Terpolymeren, wobei insbesondere

statistische Ethylen-Propylen-Copolymere mit

einem Ethylengehalt von 2 bis 10 Gew.-%, bevorzugt 5 bis 8 Gew.-%, oder

statistische Propylen-Butylen-1-Copolymere mit

einem Butylengehalt von 4 bis 25 Gew.-%, bevorzugt 10 bis 20 Gew.-%,

jeweils bezogen auf das Gesamtgewicht des Copolymeren, oder

statistische Ethylen-Propylen-Butylen-1-Terpolymere mit

einem Ethylengehalt von 1 bis 10 Gew.-%, bevorzugt 2 bis 6 Gew.-%, und

einem Butylen-1-Gehalt von 3 bis 20 Gew.-%, bevorzugt 8 bis 10 Gew.-%,

bezogen auf das Gesamtgewicht des Terpolymeren, oder

eine Mischung von einem Ethylen-Propylen-Butylen-1-Terpolymeren und einem Propylen-Butylen-1-Copolymeren

mit einem Ethylengehalt von 0,1 bis 7 Gew.-%

und einem Propylengehalt von 50 bis 90 Gew.-%

und einem Butylen-1-Gehalt von 10 bis 40 Gew.-%,

bezogen auf das Gesamtgewicht der Polymermischung,

bevorzugt sind.

Ebenso wie die Zwischenschicht kann die Deckschicht einseitig oder beidseitig aufgebracht werden. Beidseitig aufgebrachte Deckschichten können nach ihrem Aufbau, ihrer Zusammensetzung und nach ihrer Dicke gleich oder verschieden sein. Die Auswahl der geeigneten Polymeren, Additive und Dicke erfolgt für jede Deckschicht unabhängig von der jeweils anderen und im Hinblick auf die gewünschten Eigenschaften und den jeweiligen Verwendungszweck der Folie.

Es ist jedoch erfindungswesentlich für das geforderte Eigenschaftsprofil, daß mindestens eine Deckschicht der Mehrschichtfolie nicht dicker als 0,4 μm ist, wobei insbesondere der Bereich von 0,1 bis 0,3 μm bevorzugt ist, und daß das Polymere der Deckschicht peroxidisch abgebaut ist.

Siegelfähige Polymere, insbesondere Polypropylen, werden üblicherweise in Schichtdicken von deutlich über 0,5 μm aufgebracht, wodurch der gute Oberflächenglanz der Zwischenschicht wesentlich herabgesetzt wird. Der Glanzverlust ist erheblich und beträgt in manchen Fällen mehr als 30 bis 40 Einheiten. Überraschenderweise bleibt der hervorragende Glanz der Zwischenschicht erhalten, wenn die Deckschicht nicht dicker als 0,4 μm ist. Gleichzeitig weist eine solche Deckschicht völlig unerwartet immer noch trotz ihrer dünnen Schichtdicke sehr gute Siegelwerte auf. Im Rahmen weiterer Untersuchungen wurde festgestellt, daß diese Erfindung auch auf andere Folientypen übertragbar ist und nicht nur hochglanzende, opake Folientypen mit der erfindungsgemäß extrem dünnen Deckschicht versehen werden können. Es wurde gefunden, daß die verschiedensten siegelfähigen Deckschichten auch bei transparenten oder matten oder sonstigen Folientypen in ihrer Schichtdicke auf einen Bereich von ≦0,4 μm reduziert werden können.

In einer bevorzugten Ausführungsform der Mehrschichtfolie sind beidseitig unterschiedliche Deckschichten aufgebracht, wobei Varianten mit nur einer oder mit beidseitig identischen Deckschicht/en auch von der Erfindung umfaßt sein sollen.

Der Begriff "unterschiedlich" bezieht sich in diesem Zusammenhang sowohl auf die Dicke der Deckschichten als auch auf das Polymere, welches sie im wesentlichen aufbaut, und auch auf deren Zusammensetzung nach Art und Menge der zugesetzten Additive. Dabei müssen jedoch nicht zwingend alle Parameter verschieden sein. "Unterschiedlich" im Sinne der bevorzugten Ausführungsform sind Deckschichten auch, wenn nur eine der genannten Eigenschaften verschieden ist.

Insbesondere ist es bevorzugt, daß beide Deckschichten unterschiedlich dick sind, wobei die "dünnere" Deckschicht (D1) höchstens 0,4 μm, bevorzugt 0,1 bis 0,3 μm, und die "dickere" Deckschicht (D2) mindestens 0,6 μm, bevorzugt 0,7 bis 2 μm, umfaßt.

Von den vorstehend beschriebenen Polymeren für die Deckschicht sind Ethylen-Propylen-Copolymere, Ethylen-Propylen-Butylen-Terpolymere und Mischungen aus Propylen-Butylen-Copolymeren und Ethylen-Propylen-Butylen-Terpolymeren ganz besonders geeignet. Daraus ergeben sich bei zwei nach ihrer Dicke unterscheidbaren Deckschichten sechs Kombinationsmöglichkeiten, welche sich alle als besonders vorteilhaft erwiesen haben.

Die gegebenenfalls zugesetzten Additive umfassen insbesondere Siliciumdioxid als Antiblockmittel und Polydimethylsiloxan (PDMS) als Gleitmittel, welche bevorzugt der "dickeren" Deckschicht D2 zugesetzt werden. Siliciumdioxid wird mit einem mittleren Teilchendurchmesservon 1 bis 6 $\mu$m und in einer Menge von 0,1 bis 2 Gew.-% besonders vorteilhaft eingesetzt. PDMS ist mit einer Viskosität von 10 000 bis 1 000 000 mm$^2$/s und in einer Menge von 0,3 bis 2 Gew.-% (jeweils bezogen auf das Gewicht der Schicht) besonders günstig.

Weiterhin ist es wesentlich, der "dünneren" Deckschicht D1 kein SiO$_2$ und kein PDMS zuzusetzen, wenn auch gegebenenfalls andere übliche Additive in jeweils wirksamen Mengen enthalten sein können.

Zur Verbesserung der Hafteigenschaften der Deckschicht/en können die Oberflächen der Folie corona- oder flammbehandelt werden, wobei gegebenenfalls die entsprechende Behandlung einer Oberfläche ausreicht. Insbesondere ist es bevorzugt, daß die dünne Deckschicht D1 corona- oder flammbehandelt wird.

Um bestimmte Eigenschaften der erfindungsgemäßen Polypropylenfolie noch weiter zu verbessern, können sowohl die Kernschicht als auch die Zwischenschicht/en und die Deckschicht/en Zusätze in einer jeweils wirksamen Menge enthalten, vorzugsweise Antistatika und/oder Antiblockmittel und/oder Gleitmittel und/oder Stabilisatoren und/oder Neutralisationsmittel, die mit den Polymeren der Kernschicht und der Deckschicht/en verträglich sind, wobei die Deckschicht mit einer Schichtdicke von kleiner 0,4 $\mu$m kein Polydimethylsiloxan und kein SiO$_2$ enthält. Alle Mengenangaben in der folgenden Ausführung in Gewichtsprozent (Gew.-%) beziehen sich jeweils auf die Schicht oder Schichten, der oder denen das Additiv zugesetzt sein kann.

Bevorzugte **Antistatika** sind Alkali-alkansulfonate, polyethermodifizierte, d. h. ethoxylierte und/oder propoxylierte Polydiorganosiloxane (Polydialkylsiloxane, Polyalkylphenylsiloxane und dergleichen) und/oder die im wesentlichen geradkettigen und gesättigten aliphatischen, tertiären Amine mit einem aliphatischen Rest mit 10 bis 20 Kohlenstoffatomen, die mit $\omega$-Hydroxy-(C$_1$-C$_4$)-alkyl-Gruppen substituiert sind, wobei N,N-bis-(2-hydroxyethyl)-alkylamine mit 10 bis 20 Kohlenstoffatomen, vorzugsweise 12 bis 18 Kohlenstoffatomen, im Alkylrest besonders geeignet sind. Die wirksame Menge an Antistatikum liegt im Bereich von 0,05 bis 0,3 Gew.-%.

**Gleitmittel** sind höhere aliphatische Säureamide, höhere aliphatische Säureester, Wachse und Metallseifen sowie Polydimethylsiloxane. Die wirksame Menge an Gleitmittel liegt im Bereich von 0,1 bis 3 Gew.-%. Besonders geeignet ist der Zusatz von höheren aliphatischen Säureamiden im Bereich von 0,15 bis 0,25 Gew.-% in der Basisschicht. Ein insbesondere geeignetes aliphatisches Säureamid ist Erucasäureamid.

Der Zusatz von Polydimethylsiloxanen ist im Bereich von 0,3 bis 2,0 Gew.-% bevorzugt, insbesondere Polydimethylsiloxane mit einer Viskosität von 10 000 bis 1 000 000 mm$^2$/s.

Als **Stabilisatoren** können die üblichen stabilisierend wirkenden Verbindungen für Ethylen-, Propylen- und andere $\alpha$-Olefinpolymere eingesetzt werden. Deren Zusatzmenge liegt zwischen 0,05 und 2 Gew.-%. Besonders geeignet sind phenolische Stabilisatoren, Alkali-/Erdalkalistearate und/oder Alkali-/Erdalkalicarbonate.

Phenolische Stabilisatoren werden in einer Menge von 0,1 bis 0,6 Gew.-%, insbesondere 0,15 bis 0,3 Gew.-%, und mit einer Molmasse von mehr als 500 g/mol bevorzugt. Pentaerythrityl-Tetrakis-3-(3,5-di-Tertiärbutyl-4-Hydroxyphenyl)-Propionat oder 1,3,5-Trimethyl-2,4,6-tris(3,5-di-Tertiärbutyl-4-Hydroxybenzyl)benzol sind besonders vorteilhaft.

Geeignete **Antiblockmittel** sind anorganische Zusatzstoffe wie Siliciumdioxid, Calciumcarbonat, Magnesiumsilicat, Aluminiumsilicat, Calciumphosphat und dergleichen und/oder unverträgliche organische Polymerisate wie Polyamide, Polyester, Polycarbonate und dergleichen, bevorzugt werden Benzoguanaminformaldehyd-Polymere, Siliciumdioxid und Calciumcarbonat. Die wirksame Menge an Antiblockmittel liegt im Bereich von 0,1 bis 2 Gew.-%, vorzugsweise 0,1 bis 0,5 Gew.-%. Die mittlere Teilchengröße liegt zwischen 1 und 6 $\mu$m, insbesondere 2 und 5 $\mu$m, wobei Teilchen mit einer kugelförmigen Gestalt, wie in der EP-A-0 236 945 und der DE-A-38 01 535 beschrieben, besonders geeignet sind.

**Neutralisationsmittel** sind vorzugsweise Calciumstearat und/oder Calciumcarbonat einer mittleren Teilchengröße von höchstens 0,7 $\mu$m, einer absoluten Teilchengröße von kleiner 10 $\mu$m und einer spezifischen Oberfläche von mindestens 40 m$^2$/g.

Die Erfindung betrifft weiterhin ein Verfahren zur Herstellung der erfindungsgemäßen Mehrschichtfolie nach dem an sich bekannten Coextrusionsverfahren.

Im Rahmen dieses Verfahrens wird so vorgegangen, daß die den einzelnen Schichten der Folie entsprechenden Schmelzen durch eine Flachdüse coextrudiert werden, die so erhaltene Folie zur Verfestigung auf einer oder mehreren Walze/n abgezogen wird, die Folie anschließend biaxial gestreckt (orientiert), die biaxial gestreckte Folie thermofixiert und gegebenenfalls an der zur Coronabehandlung vorgesehenen Oberflächenschicht coronabehandelt wird.

Die biaxiale Streckung (Orientierung) kann simultan oder aufeinanderfolgend durchgeführt werden, wobei die aufeinanderfolgende biaxiale Streckung, bei der zuerst längs (in Maschinenrichtung) und dann quer (senkrecht zur Maschinenrichtung) gestreckt wird, bevorzugt ist.

Zunächst wird wie beim Coextrusionsverfahren üblich das Polymere oder die Polymermischung der einzelnen Schichten in einem Extruder komprimiert und verflüssigt, wobei die gegebenenfalls zugesetzten Additive bereits im Polymer enthalten sein können. Die Schmelzen werden dann gleichzeitig durch eine Flachdüse (Breitschlitzdüse) gepreßt, und die ausgepreßte mehrschichtige Folie wird auf einer oder mehreren Abzugswalzen abgezogen, wobei sie abkühlt und sich verfestigt.

Die so erhaltene Folie wird dann längs und quer zur Extrusionsrichtung gestreckt, was zu einer Orientierung der Molekülketten führt. In Längsrichtung wird vorzugsweise 4:1 bis 7:1 und in Querrichtung vorzugsweise 6:1 bis 9:1 gestreckt. Das Längsstrecken wird man zweckmäßigerweise mit Hilfe zweier entsprechend dem angestrebten Streckverhältnis verschieden schnellaufender Walzen durchführen und das Querstrecken mit Hilfe eines entsprechenden Kluppenrahmens.

An die biaxiale Streckung der Folie schließt sich ihre Thermofixierung (Wärmebehandlung) an, wobei die Folie etwa 0,5 bis 10 s lang bei einer Temperatur von 110 bis 130 °C gehalten wird. Anschließend wird die Folie in üblicher Weise mit einer Aufwickeleinrichtung aufgewickelt.

Es hat sich als besonders günstig erwiesen, die Abzugswalze oder -walzen, durch die die ausgepreßte Folie auch abgekühlt und verfestigt wird, bei einer Temperatur von 10 bis 90 °C zu halten, bevorzugt 20 bis 60 °C.

Darüber hinaus wird die Längsstreckung vorteilhafterweise bei einer Temperatur von weniger als 140 °C, vorzugsweise im Bereich von 110 bis 130 °C, und die Querstreckung bei einer Temperatur größer 140 °C, vorzugsweise bei 145 bis 160 °C, durchgeführt.

Gegebenenfalls kann/können wie oben erwähnt nach der biaxialen Streckung eine oder beide Oberfläche/n der Folie nach einer der bekannten Methoden corona- oder flammbehandelt werden. Zweckmäßigerweise wird dabei so vorgegangen, daß die Folie zwischen zwei als Elektroden dienenden Leiterelementen hindurchgeführt wird, wobei zwischen den Elektroden eine so hohe Spannung, meist Wechselspannung (etwa 10 000 V und 10 000 Hz), angelegt ist, daß Sprüh- oder Coronaentladungen stattfinden können. Durch die Sprüh- oder Coronaentladung wird die Luft oberhalb der Folienoberfläche ionisiert und reagiert mit den Molekülen der Folienoberfläche, so daß polare Einlagerungen in der im wesentlichen unpolaren Polymermatrix entstehen. Die Behandlungsintensitäten liegen im üblichen Rahmen, wobei 38 bis 45 mN/m bevorzugt sind.

Die erfindungsgemäße Mehrschichtfolie besitzt eine Kombination von Eigenschaften, die sie in besonders hohem Maße geeignet macht für ihren bestimmungsgemäßen Verwendungszweck als Verpackungsfolie oder Einschlagfolie auf schnellaufenden Einschlagmaschinen. Sie weist nämlich all die Eigenschaften auf, die von Polypropylenfolien im Hinblick auf enges, falten- und wellenfreies, werbewirksames Einschlagbild gefordert werden. Darüber hinaus eignet sich die erfindungsgemäße Mehrschichtfolie, insbesondere nach Corona- bzw. Flammbehandlung, auch zur Herstellung von metallisierten und bedruckten Folien.

Zusammenfassend ist festzustellen, daß sich die erfindungsgemäße Mehrschichtfolie durch eine Vielzahl vorteilhafter Eigenschaften auszeichnet, insbesondere durch

- sehr hohen Glanz,
- eine hohe Opazität und einen hohen Weißgrad,
- eine homogene Folienoptik,
- gute ein- bzw. beidseitige Siegeleigenschaften,
- eine gute Oberflächenbehandelbarkeit,
- gute Sofort- und Langzeitbedruckbarkeit,
- bei Harzanwesenheit in der Zwischenschicht: verbesserte Barriereeigenschaften hinsichtlich Wasserdampfdurchtritt,
- eine hohe Kratzfestigkeit beider Oberflächenschichten,
- gute Beschichtungs- und Weiterverarbeitungseigenschaften.

Die Erfindung wird durch die nachfolgenden Beispiele näher erläutert:

**Beispiel 1**

Es wurde ein fünfschichtige symmetrische Folie (Aufbau der Schichten: DZKZD) hergestellt, wobei folgende Produktionsparameter eingehalten wurden:

|  | Extrusionstemp. | Masseausstoß |
|---|---|---|
| Kernschicht K | 280 °C | 2 400 kg/h |
| Zwischenschichten Z | 280 °C | 600 kg/h (insgesamt) |
| Deckschichten D | 260 °C | 32 kg/h (insgesamt) |

Die Kernschicht und die beiden Zwischenschichten wurden über einen Laminaradapter zusammengeführt (ZKZ-Folie), da sie in der Viskosität etwa gleich sind. Das Aufbringen der beiden Deckschichten auf die ZKZ-Folie erfolgte dann mittels einer Dreischichtdüse. Diese Vorfolie wurde auf einer Kühlwalze (Temperatur der Kühlwalze: 30 °C) abgekühlt. Anschließend erfolgte die Streckung zunächst in Längs- ($\lambda_1$ = 5,5:1; T = 130 °C) und dann in Querrichtung ($\lambda_q$ = 9:1; T = 160 °C, Konvergenz: 15 %). Die Maschinengeschwindigkeit betrug ca. 210 m/min.

Die Folie hatte folgenden Aufbau:

Kernschicht K:

90,85 Gew.-%  Propylenhomopolymerisat mit einem Schmelzflußindex von 4 g/10 min (230 °C, 21,6 N)
5 Gew.-%  Titandioxid (Rutil) mit einem mittleren Teilchendurchmesser von 0,2 μm mit Beschichtung aus $Al_2O_3$ und Stearinsäure
4 Gew.-%  Calciumcarbonat mit einem mittleren Teilchendurchmesser von 1,5 μm
0,15 Gew.-%  N,N-bis-ethoxyalkylamin (Antistatikum; Armostat® 300, AKZO, Düren, DE)

Das Titandioxid wurde über ein Masterbatch (45 Gew.-% PP, 55 Gew.-% $TiO_2$; Schulman white 8555 P, Fa. Schulman, Kerpen, DE) ebenso wie das Calciumcarbonat (Masterbatch 30 Gew.-% PP, 70 Gew.-% $CaCO_3$; Multibase® 7012 T, OMYA, Köln, DE) eingeführt.

Zwischenschichten Z:

100 Gew.-%  Propylenhomopolymerisat mit einem Schmelzflußindex von 5 g/10 min (230 °C, 21,6 N)

Deckschichten D:

100 Gew.-%  peroxidisch abgebautes Ethylen-Propylen-Copolymerisat mit einem $C_2$-Gehalt von 4 %, einem Schmelzflußindex von 12 g/10 min (230 °C, 21,6 N) und einem Abbaufaktor von 8

| | |
|---|---|
| Dicke der Folie: | 40 μm |
| Dicke von Schicht K: | 32,6 μm |
| Dicke der Zwischenschichten Z: | jeweils 3,5 μm |
| Dicke der Deckschichten D: | jeweils 0,2 μm |

Eine Deckschicht (D-Seite) wurde mit 41 mN/m coronabehandelt. Die Folie hat die in der Tabelle genannten erfindungsgemäßen Eigenschaften.

**Beispiel 2**

Es wurde gemäß Beispiel 1 eine vierschichtige asymmetrische Folie mit folgendem Aufbau hergestellt:

| | |
|---|---|
| Kernschicht K: | wie in Beispiel 1 |
| Zwischenschicht Z: | wie in Beispiel 1 |
| Deckschicht D1: | wie in Beispiel 1 |
| Deckschicht D2: | übliches $C_2C_3$-Copolymerisat (ELTEX® PKS 419 x 6672; Solvay, Solingen, DE) |

Die Foliendicke beträgt wiederum 40 μm. Die Dicke der Kernschicht ist 35,6 μm. Die Dicke der Zwischenschicht ist 3,5 μm. Die Dicke von Deckschicht D2 beträgt 0,7 μm; diese Schicht ist siegelfähig. Die Dicke von Deckschicht D1 ist wiederum 0,2 μm. Sie ist überraschenderweise auch siegelfähig. Die D1-Seite wurde wieder mit 41 mN/m coronabehandelt.

**Beispiel 3**

Es wurde gemäß Beispiel 1 eine fünfschichtige Folie mit folgendem symmetrischen Aufbau hergestellt:

| | |
|---|---|
| Kernschicht K: | wie in Beispiel 1 |
| Zwischenschichten Z: | wie in Beispiel 1, jedoch zusätzlich mit 3 % Titandioxid (beschichtet wie in Beispiel 1) |
| Deckschichten D: | wie in Beispiel 1 |

**Beispiel 4**

Es wurde gemäß Beispiel 1 eine fünfschichtige Folie mit folgendem symmetrischen Aufbau hergestellt:

| | |
|---|---|
| Kernschicht K: | wie in Beispiel 1 |
| Zwischenschichten Z: | wie in Beispiel 3, jedoch zusätzlich mit 10 % Kohlenwasserstoffharz (Escorez® ECR 356, Exxon, Köln, DE) |
| Deckschichten D: | wie in Beispiel 1 |

**Beispiel 5**

Es wurde gemäß Beispiel 1 eine vierschichtige asymmetrische (Schichtaufbau D2KZD1) Folie mit folgendem Aufbau hergestellt:

| | |
|---|---|
| Kernschicht K: | wie in Beispiel 1 |
| Zwischenschicht Z: | wie in Beispiel 1 |
| Deckschicht D1: | wie in Beispiel 1 |
| Deckschicht D2: | niedrigsiegelndes Polymerblend (Tafmer®; Mitsui Petrochemical, Tokio, JP) |

Die Foliendicke beträgt wiederum 40 μm. Die Dicke der Kernschicht ist 35,6 μm. Die Dicke der Zwischenschicht ist 3,5 μm. Die Dicke von Deckschicht D2 beträgt 0,7 μm; die Schicht ist siegelfähig. Die Dicke von Deckschicht D1 ist wiederum 0,2 μm und wie in Beispiel 2 erwähnt ebenfalls überraschenderweise siegelfähig. Die D1-Seite wurde wieder mit 41 mN/m coronabehandelt. Es wurde eine minimale Siegelanspringtemperatur von 80 °C gemessen. Zur Bestimmung dieser Größewird ein 15 mm breiter Streifen bei verschiedenen Temperaturen für 0,5 s bei 10 N/cm$^2$ gesiegelt. Die minimale Siegelanspringtemperatur ist erreicht, wenn beim Auseinanderziehen der Siegelnaht 0,5 N/mm Siegelkraft erreicht werden (bei 20 cm/min).

**Vergleichsbeispiel 1**

Es wurde eine Folie wie in Beispiel 1 hergestellt, jedoch hat das Calciumcarbonat eine Korngröße von 3,0 μm. Aus der Tabelle geht hervor, daß der Glanz der Folie deutlich abgenommen hat. Auch die Opazität und der Weißgrad sind zurückgegangen.

**Vergleichsbeispiel 2**

Es wurde eine Folie wie in Beispiel 1 hergestellt, jedoch hat das Calciumcarbonat eine Korngröße von 0,8 μm. Die Folie ist wolkig, und die Opazität ist deutlich geringer. Daneben ist das gewählte Calciumcarbonat sehr teuer.

**Vergleichsbeispiel 3**

Es wurde eine Folie wie in Beispiel 1 hergestellt, jedoch sind die Deckschichten nicht aus peroxidisch abgebautem Copolymer. Der Glanz der Folie ist merklich zurückgegangen.

**Vergleichsbeispiel 4**

Es wurde eine Folie wie in Beispiel 1 hergestellt, jedoch ist die Schichtdicke der Deckschichten jetzt 0,6 μm. Der Glanz der Folie läßt deutlich zu wünschen übrig.

**Vergleichsbeispiel 5**

Es wurde eine Folie wie in Beispiel 1 hergestellt, jedoch ohne Deckschichten. Die Folie hat einen hohen Glanz, jedoch keine Coronahaltbarkeit.

Zur Charakterisierung der Rohstoffe und der Folien wurden die folgenden Meßmethoden benutzt:

Schmelzflußindex (MFI)

DIN 53 735 bei 21,6 N Belastung und 230 °C.

Schmelzpunkt

DSC-Messung, Maximum der Schmelzkurve, Aufheizgeschwindigkeit 20 °C/min.

Glanz

Der Glanz wurde nach DIN 67 530 bestimmt. Gemessen wurde der Reflektorwert als optische Kenngröße für die Oberfläche einer Folie. Angelehnt an die Normen ASTM-D 523-78 und ISO 2813 wurde der Einstrahlwinkel mit 60° oder 20° eingestellt. Ein Lichtstrahl trifft unter dem eingestellten Einstrahlwinkel auf die ebene Prüffläche und wird von dieser reflektiert bzw. gestreut. Die auf den photoelektronischen Empfänger auffallenden Lichtstrahlen werden als proportionale elektrische Größe angezeigt. Der Meßwert ist dimensionslos und muß mit dem Einstrahlwinkel angegeben werden.

Oberflächenspannung

Die Oberflächenspannung wurde mittels der sogenannten Tintenmethode (DIN 53 364) bestimmt.

Bedruckbarkeit

Die coronabehandelten Folien wurden 14 Tage nach ihrer Produktion (Kurzzeitbeurteilung) bzw.6 Monate nach ihrer Produktion (Langzeitbeurteilung) bedruckt.

Die Farbhaftung wurde mittels Klebebandtest beurteilt. Konnte mittels Klebeband keine Farbe abgelöst werden, so wurde die Farbhaftung mit mäßig und bei deutlicher Farbablösung mit schlecht beurteilt.

Opazität und Weißgrad

Die Bestimmung der Opazität und des Weißgrades erfolgt mit Hilfe des elektrischen Remissionsphotometers "ELREPHO" der Firma Zeiss, Oberkochem (DE), Normlichtart C, 2° Normalbeobachter. Die Opazität wird nach DIN 53 146 bestimmt. Der Weißgrad wird als WG = RY + 3RZ - 3RX definiert.

WG = Weißgrad; RY, RZ, RX = entsprechende Reflexionsfaktoren bei Einsatz des Y-, Z- und X-Farbmeßfilters. Als Weißstandard wird ein Preßling aus Bariumsulfat (DIN 5033, Teil 9) verwendet. Ein Folienmuster (Größe DIN A4) wird in einer Vorrichtung vom Typ Suntest CPS der Firma Heraeus, Hanau (DE), mehrere Tage bestrahlt, Bestrahlungsstärke 765 $W/m^2$, und anschließend mit unbewaffnetem Auge mit einem nicht bestrahlten Muster verglichen.

Siegelnahtfestigkeit

Zur Bestimmung wurden zwei 15 mm breite Folienstreifen übereinandergelegt und bei 130 °C, einer Siegelzeit von 0,5 s und einem Siegeldruck von 10 $N/cm^2$ (Gerät: Brugger Typ NDS, einseitig beheizte Siegelbacke) versiegelt. Die Siegelnahtfestigkeit wurde nach der T-Peel-Methode bestimmt.

**TABELLE**

| Eigenschaften / Folie | Opazität | Weißgrad | Glanz 20° D1/D2 | Oberflächenspannung nach 6 Monaten | Siegelnahtfestigkeit der Deckschicht ≤0,4 µm |
|---|---|---|---|---|---|
| Beispiel 1 | 85 | 85 | 60/60 | > 38 | 1,8 |
| Beispiel 2 | 85 | 85 | 60/9 | = | 1,8 |
| Beispiel 3 | 86 | 90 | 60/60 | = | 2,0 |
| Beispiel 4 | 86 | 90 | 63/63 | = | 1,9 |
| Beispiel 5 | 85 | 85 | 60/10 | = | 2,1 |
| Vergleichsbeispiel 1 | 80 | 80 | 35/35 | = | |
| Vergleichsbeispiel 2 | 70 | 80 | 62/62 | = | |
| Vergleichsbeispiel 3 | 85 | 85 | 48/48 | = | |
| Vergleichsbeispiel 4 | 85 | 85 | 45/45 | = | |
| Vergleichsbeispiel 5 | 85 | 85 | 70/70 | < 34 | |

**Patentansprüche**

1. Siegelbare, opake, biaxial orientierte Polypropylen-Mehrschichtfolie aus mindestens einer Kernschicht K und einer darauf angeordneten Zwischenschicht Z und einer auf der Zwischenschicht angeordneten Deckschicht D gemäß einem Aufbau KZD, wobei

    a) die Kernschicht ein Propylenpolymeres und Calciumcarbonat oder eine Polypropylenmischung und Calciumcarbonat mit einem mittleren Teilchendurchmesser von 1 bis 2 μm enthält,
    b) die Zwischenschicht ein Propylenpolymeres oder eine Polypropylenmischung enthält und
    c) die Deckschicht eine Dicke von <0,4 μm aufweist und kein Polydimethylsiloxan und kein $SiO_2$ enthält und das Polymere der Deckschicht peroxidisch abgebaut ist und das Polymere
        ein statistisches Ethylen-Propylen-Copolymeres mit einem Ethylengehalt von 2 bis 10 Gew.-% oder
        ein Copolymeres von
        Ethylen und Butylen oder
        Propylen und Butylen oder
        Ethylen und einem anderen α-Olefin mit 5 bis 10 Kohlenstoffatomen oder
        Propylen und einem anderen α-Olefin mit 5 bis 10 Kohlenstoffatomen oder
        ein Terpolymeres von
        Ethylen und Propylen und Butylen oder
        Ethylen und Propylen und einem anderen α-Olefin mit 5 bis 10 Kohlenstoffatomen oder
        eine Mischung aus einem oder mehreren der genannten Co- und/oder Terpolymeren mit Polypropylen
    oder
        eine Mischung aus zwei oder mehreren der genannten Co- und/oder Terpolymeren
    ist.

2. Polypropylen-Mehrschichtfolie nach Anspruch 1, dadurch gekennzeichnet, daß die Folie vier- oder fünfschichtig ist.

3. Polypropylen-Mehrschichffolie nach Anspruch 1 oder 2, dadurch gekennzeichnet, daß die Kernschicht als weiteres Additiv Titandioxid enthält.

4. Polypropylen-Mehrschichtfolie nach einem oder mehreren der vorangehenden Ansprüche, dadurch gekennzeichnet, daß der Anteil an Titandioxid in der Kernschicht zwischen 1 und 5 Gew.-%, bezogen auf das Gewicht der Kernschicht, liegt und daß der mittlere Teilchendurchmesser der $TiO_2$-Partikel 0,15 bis 0,30 μm beträgt.

5. Polypropylen-Mehrschichtfolie nach einem oder mehreren der vorangehenden Ansprüche, dadurch gekennzeichnet, daß der $CaCO_3$-Gehalt in der Kernschicht 2 bis 7 Gew.-% beträgt (bezogen auf das Gewicht der Kernschicht).

6. Polypropylen-Mehrschichtfolie nach einem oder mehreren der vorangehenden Ansprüche, dadurch gekennzeichnet, daß die Zwischenschicht als Additiv ein Kohlenwasserstoffharz und gegebenenfalls Ttandioxid enthält.

7. Polypropylen-Mehrschichtfolie nach einem oder mehreren der vorangehenden Ansprüche, dadurch gekennzeichnet, daß der Harzanteil in der Zwischenschicht 1 bis 30 Gew.-% beträgt (bezogen auf die Masse der Zwischenschicht).

8. Polypropylen-Mehrschichtfolie nach einem oder mehreren der vorangehenden Ansprüche, dadurch gekennzeichnet, daß das Propylenpolymere der Zwischenschicht peroxidisch abgebaut ist.

9. Polypropylen-Mehrschichtfolie nach einem oder mehreren der vorangehenden Ansprüche, dadurch gekennzeichnet, daß der Abbaufaktor des in der Zwischenschicht verwendeten Polypropylenpolymeren 3 bis 15 beträgt.

10. Polypropylen-Mehrschichtfolie nach einem oder mehreren der vorangehenden Ansprüche, dadurch gekennzeichnet, daß die Dicke der Zwischenschicht 2 bis 6 μm betragt.

11. Polypropylen-Mehrschichtfolie nach einem oder mehreren der vorangehenden Ansprüche, dadurch gekennzeichnet, daß die Deckschicht/en
        ein statistisches Ethylen-Propylen-Copolymeres mit einem Ethylengehalt von 2 bis 10 Gew.-% oder
        ein Copolymeres von
        Ethylen und Butylen-1 oder
        Propylen und Butylen-1 oder

ein Terpolymeres von
Ethylen und Propylen und Butylen-1 oder
eine Mischung aus einem oder mehreren der genannten Co- und/oder Terpolymeren mit Polypropylen oder
einer Mischung aus zwei oder mehreren der genannten Co- und/oder Terpolymeren,
enthält/enthalten.

12. Polypropylen-Mehrschichtfolie nach einem oder mehreren der vorangehenden Ansprüche, dadurch gekennzeichnet, daß die Deckschicht/en ein

statistisches Ethylen-Propylen-Copolymeres mit
einem Ethylengehalt von 2 bis 10 Gew.-% oder
statistisches Propylen-Butylen-1-Copolymeres mit
einem Butylen-1-Gehalt von 4 bis 25 Gew.-%,
jeweils bezogen auf das Gesamtgewicht des Copolymeren, oder ein statistisches Ethylen-Propylen-Butylen-1-Terpolymeres mit
einem Ethylengehalt von 1 bis 10 Gew.-%, bevorzugt 2 bis 6 Gew.-%, und
einem Butylen-1-Gehalt von 3 bis 20 Gew.-%, bevorzugt 8 bis 10 Gew.-%,
bezogen auf das Gesamtgewicht des Terpolymeren, oder eine
Mischung von einem Ethylen-Propylen-Butylen-1-Terpolymeren und einem Propylen-Butylen-1-Copolymeren
mit einem Ethylengehalt von 0,1 bis 7 Gew.-%
und einem Propylengehalt von 50 bis 90 Gew.-%
und einem Butylen-1-Gehalt von 10 bis 40 Gew.-%,
bezogen auf das Gesamtgewicht der Polymermischung,
enthält/enthalten.

13. Polypropylen-Mehrschichtfolie nach einem oder mehreren der vorangehenden Ansprüche, dadurch gekennzeichnet, daß der Abbaufaktor des in der/den Deckschicht/en verwendeten Polymeren 3 bis 15 beträgt.

14. Polypropylen-Mehrschichtfolie nach einem oder mehreren der vorangehenden Ansprüche, dadurch gekennzeichnet, daß die Dicke der Deckschicht 0,1 bis 0,3 $\mu$m beträgt.

15. Polypropylen-Mehrschichtfolie nach einem oder mehreren der vorangehenden Ansprüche, dadurch gekennzeichnet, daß beidseitig Deckschichten aufgebracht sind und die Dicke der anderen Deckschicht >0,6 $\mu$m beträgt.

16. Polypropylen-Mehrschichtfolie nach Anspruch 15, dadurch gekennzeichnet, daß beide Deckschichten das gleiche Polymer enthalten.

17. Polypropylen-Mehrschichtfolie nach Anspruch 15, dadurch gekennzeichnet, daß beide Deckschichten verschiedene Polymere enthalten.

18. Polypropylen-Mehrschichtfolie nach Anspruch 15, dadurch gekennzeichnet, daß die Deckschicht von >0,6 $\mu$m Polydimethylsiloxan und Siliciumdioxid enthält.

19. Polypropylen-Mehrschichtfolie nach einem oder mehreren der Ansprüche 1 bis 18, dadurch gekennzeichnet, daß die Kernschicht und/oder die Zwischenschicht/en und/oder die Deckschicht/en als Additive Antistatika und/oder Antiblockmittel und/oder Gleitmittel und/oder Stabilisatoren und/oder Neutralisationsmittel enthält/enthalten.

20. Verwendung einer Folie nach einem oder mehreren der Ansprüche 1 bis 19 als Verpackungsfolie.

21. Verwendung einer Folie nach einem oder mehreren der Ansprüche 1 bis 19 zur Herstellung einer bedruckten Folie.

**Claims**

1. A sealable, opaque, biaxially oriented multilayer polypropylene film comprising at least one core layer C and an intermediate layer I located thereon and a top layer T located on the intermediate layer in accordance with a CIT build-up, where

a) the core layer comprises a propylene polymer and calcium carbonate or a polypropylene mixture and calcium carbonate having an average particle diameter of 1 to 2 $\mu$m,

b) the intermediate layer comprises a propylene polymer or a polypropylene mixture, and

c) the top layer has a thickness of < 0.4 μm and comprises no polydimethylsiloxane and no $SiO_2$ and the polymer of the top layer is peroxidically degraded and the polymer is

a random ethylene/propylene copolymer having an ethylene content of 2 to 10% by weight or
a copolymer of
ethylene and butylene or
propylene and butylene or
ethylene and another $\alpha$-olefin having 5 to 10 carbon atoms or
propylene and another $\alpha$-olefin having 5 to 10 carbon atoms or
a terpolymer of
ethylene and propylene and butylene or
ethylene and propylene and another
$\alpha$-olefin having 5 to 10 carbon atoms or
a mixture of one or more of the co-and/or terpolymers mentioned with polypropylene or
a mixture of two or more of the co- and/or terpolymers mentioned.

2. A multilayer polypropylene film as claimed in claim 1, wherein the film has four or five layers.

3. A multilayer polypropylene film as claimed in claim 1 or 2, wherein the core layer comprises titanium dioxide as a further additive.

4. A multilayer polypropylene film as claimed in one or more of the preceding claims, wherein the content of titanium dioxide in the core layer is between 1 and 5% by weight, based on the weight of the core layer, and the average particle diameter of the $TiO_2$ particles is 0.15 to 0.30 μm.

5. A multilayer polypropylene film as claimed in one or more of the preceding claims, wherein the $CaCO_3$ content in the core layer is 2 to 7% by weight (based on the weight of the core layer).

6. A multilayer polypropylene film as claimed in one or more of the preceding claims, wherein the intermediate layer comprises as additive a hydrocarbon resin and, if appropriate, titanium dioxide.

7. A multilayer polypropylene film as claimed in one or more of the preceding claims, wherein the resin content in the intermediate layer is 1 to 30% by weight (based on the weight of the intermediate layer).

8. A multilayer polypropylene film as claimed in one or more of the preceding claims, wherein the propylene polymer of the intermediate layer is peroxidically degraded.

9. A multilayer polypropylene film as claimed in one or more of the preceding claims, wherein the degradation factor of the polypropylene polymer used in the intermediate layer is 3 to 15.

10. A multilayer polypropylene film as claimed in one or more of the preceding claims, wherein the thickness of the intermediate layer is 2 to 6 μm.

11. A multilayer polypropylene film as claimed in one or more of the preceding claims, wherein the top layer(s) comprise(s)

a random ethylene/propylene copolymer having an ethylene content of 2 to 10% by weight or
a copolymer of
ethylene and 1-butylene or
propylene and 1-butylene or
a terpolymer of
ethylene and propylene and 1-butylene or
a mixture of one or more of the co- and/or terpolymers mentioned with polypropylene or
a mixture of two or more of the co- and/or terpolymers mentioned.

12. A multilayer polypropylene film as claimed in one or more of the preceding claims, wherein the top layer(s) comprise(s) a

random ethylene/propylene copolymer having
an ethylene content of 2 to 10% by weight or

random propylene/1-butylene copolymer having
a 1-butylene content of 4 to 25% by weight,
in each case based on the total weight of the copolymer, or a
random ethylene/propylene/1-butylene terpolymer having
an ethylene content of 1 to 10% by weight, preferably 2 to 6% by weight, and
a 1-butylene content of 3 to 20% by weight, preferably 8 to 10% by weight,
based on the total weight of the terpolymer, or
a mixture of an ethylene/propylene/1-butylene terpolymer and a propylene/1-butylene copolymer
having an ethylene content of 0.1 to 7% by weight
and a propylene content of 50 to 90% by weight
and a 1-butylene content of 10 to 40% by weight,
based on the total weight of the polymer mixture.

13. A multilayer polypropylene film as claimed in one or more of the preceding claims, wherein the degradation factor of the polymer used in the top layer(s) is 3 to 15.

14. A multilayer polypropylene film as claimed in one or more of the preceding claims, wherein the thickness of the top layer is 0.1 to 0.3 μm.

15. A multilayer polypropylene film as claimed in one or more of the preceding claims, wherein top layers are applied to both sides and the thickness of the other top layer is >0.6 μm.

16. A multilayer polypropylene film as claimed in claim 15, wherein the two top layers comprise the same polymer.

17. A multilayer polypropylene film as claimed in claim 15, wherein the two top layers comprise different polymers.

18. A multilayer polypropylene film as claimed in claim 15, wherein the top layer of >0.6 μm comprises polydimethylsiloxane and silicon dioxide.

19. A multilayer polypropylene film as claimed in one or more of claims 1 to 18, wherein the core layer and/or the intermediate layer(s) and/or the top layer(s) comprise(s) as additives antistatics and/or antiblocking agents and/or lubricants and/or stabilizers and/or neutralizing agents.

20. The use of a film as claimed in one or more of claims 1 to 19 as packaging film.

21. The use of a film as claimed in one or more of claims 1 to 19 for the production of a printed film.

**Revendications**

1. Feuille multicouche en polypropylène orienté biaxialement, opaque, scellable, composée d'au moins une âme K et d'une couche intermédiaire Z disposée sur celle-ci et d'une semelle D disposée sur la couche intermédiaire selon l'assemblage KZD :

   a) l'âme se compose d'un polymère de propylène et du carbonate de calcium ou d'un mélange de polypropylènes et de carbonate de calcium ayant une taille moyenne de particules de 1 à 2 μm,
   b) la couche intermédiaire contient un polymère de propylène ou un mélange de polypropylènes, et
   c) la semelle présente une épaisseur de ≤ 0,4 mm et ne contient pas de polydiméthylsiloxane, ni de SiO$_2$, et le polymère de la semelle est dégradé par des peroxydes et le polymère étant
      un copolymère statistique de l'éthylène-propylène ayant une teneur en éthylène de 2 à 10% en poids, ou
      un copolymère
      de l'éthylène et du butylène ou
      du propylène et du butylène ou
      de l'éthylène et d'une autre α-oléfine avec 5 à 10 atomes de carbone ou
      du propylène et d'une autre α-oléfine avec 5 à 10 atomes de carbone ou
      un terpolymère
      de l'éthylène et du propylène et butylène ou
      de l'éthylène et du propylène et d'une autre α-oléfine avec 5 à 10 atomes de carbone ou
      un mélange d'un ou de plusieurs des co- et/ou terpolymères avec le polypropylène ou un mélange de deux ou plusieurs des co- et/ou terpolymères.

2. Feuille multicouche de polypropylène selon la revendication 1 caractérisée en ce que la feuille comporte quatre ou cinq couches.

3. Feuille multicouche de polypropylène selon la revendication 1 ou 2, caractérisée en ce qu'elle contient comme autre additif le dioxyde de titane.

4. Feuille multicouche de polypropylène selon une ou plusieurs des revendications précédentes, caractérisée en ce que le taux en dioxyde de titane dans l'âme est compris entre 1 à 5% en poids par rapport au poids de l'âme, et en ce que le diamètre moyen des particules de $TiO_2$ est de 0,15 à 0,30 µm.

5. Feuille multicouche de polypropylène selon une ou plusieurs des revendications précédentes, caractérisée en ce que la teneur en $CaCO_3$ dans l'âme est de 2 à 7% en poids (par rapport au poids de l'âme).

6. Feuille multicouche de polypropylène selon une ou plusieurs des revendications précédentes, caractérisée en ce que la couche intermédiaire contient en tant qu'additif une résine hydrocarbonée et éventuellement du dioxyde de titane.

7. Feuille multicouche de polypropylène selon une ou plusieurs des revendications précédentes, caractérisée en ce que le taux en résine dans la couche intermédiaire est de 1 à 30% en poids (par rapport à la masse de la couche intermédiaire).

8. Feuille multicouche de polypropylène selon une ou plusieurs des revendications précédentes, caractérisée en ce que le polymère de propylène dans la couche intermédiaire est dégradé par des peroxydes.

9. Feuille multicouche de polypropylène selon une ou plusieurs des revendications précédentes, caractérisée en ce que le facteur de dégradation du polymère de polypropylène utilisé dans la couche multifeuille est de 3 à 15.

10. Feuille multicouche de polypropylène selon une ou plusieurs des revendications précédentes, caractérisée en ce que l'épaisseur de la couche intermédiaire est de 2 à 6 µm.

11. Feuille multicouche de polypropylène selon une ou plusieurs des revendications précédentes, caractérisée en ce que la semelle contient
    un copolymère statistique de l'éthylène-propylène avec
    une teneur en éthylène de 2 à 10% en poids, ou
    un copolymère
    de l'éthylène et du butylène-1 ou,
    du propylène et du butylène-1 ou
    un terpolymère
    de l'éthylène et propylène et butylène-1 ou
    un mélange d'un ou de plusieurs des co- et/ou terpolymères avec le polypropylène ou
    un mélange de deux ou de plusieurs des co- et/ou terpolymères cités.

12. Feuille multicouche de polypropylène selon une ou plusieurs des revendications précédentes, caractérisée en ce que la (les) semelle(s) contient
    un copolymère statistique de l'éthylène-propylène avec une teneur en éthylène de 2 à 10% en poids, ou
    un copolymère statistique du propylène-butylène-1 avec
    une teneur en butylène-1 de 4 à 25% en poids, chaque fois par rapport au poids total du mélange du copolymère, ou un terpolymère statistique de l'éthylène-propylène-butylène-1 avec
    une teneur en éthylène de 1 à 10% en poids, de préférence de 2 à 6% en poids, et
    une teneur en butylène-1 de 3 à 20% en poids, de préférence de 8 à 10%,
    par rapport au poids total du terpolymère ou un mélange de terpolymère de l'éthylène-propylène-butylène-1 avec
    un copolymère de propylène-butylène-1
    ayant une teneur en éthylène de 0,1 à 7% en poids,
    et une teneur en propylène de 50 à 90% en poids,
    et une teneur en butylène-1 de 10 à 40% en poids par rapport au poids total du mélange de polymères.

13. Feuille multicouche de polypropylène selon une ou plusieurs des revendications précédentes, caractérisée en ce que le facteur de dégradation du polymère utilisé dans la (les) semelle(s) est de 3 à 15.

**14.** Feuille multicouche de polypropylène selon une ou plusieurs des revendications précédentes, caractérisée en ce que l'épaisseur de la semelle est de 0,1 à 0,3 μm.

**15.** Feuille multicouche de polypropylène selon une ou plusieurs des revendications précédentes, caractérisée en ce que les semelles sont déposées des deux côtés et l'épaisseur de l'autre semelle est > 0,6 μm.

**16.** Feuille multicouche de polypropylène selon la revendication 15, caractérisée en ce que les deux semelles contiennent le même polymère.

**17.** Feuille multicouche de polypropylène selon la revendication 15, caractérisée en ce que les deux semelles contiennent un polymère différent.

**18.** Feuille multicouche de polypropylène selon la revendication 15, caractérisée en ce que la semelle d'une épaisseur > 0,6 μm contient du polydiméthylsiloxane et du dioxyde de silicium.

**19.** Feuille multicouche de polypropylène selon une ou plusieurs des revendications 1 à 18, caractérisée en ce que l'âme et/ou la (les) couche(s) intermédiaire(s) et/ou la (les) semelle(s) contiennent en tant qu'additif des antistatiques et/ou des agents antibloquants et/ou des agents lubrifiants et/ou des stabilisants et/ou des agents neutralisants.

**20.** Utilisation d'une feuille selon une ou plusieurs des revendications 1 à 19, comme feuille d'emballage.

**21.** Utilisation d'une feuille selon une ou plusieurs des revendications 1 à 19, pour la préparation d'une feuille imprimée.